**Europäisches Patentamt**

(19) **European Patent Office**

**Office européen des brevets**

(11) Publication number : **0 271 525 B1**

(12) **EUROPEAN PATENT SPECIFICATION**

(45) Date of publication of patent specification :
24.06.92 Bulletin 92/26

(51) Int. Cl.⁵ : **H01M 10/34, H02H 7/18**

(21) Application number : **87903660.6**

(22) Date of filing : **26.05.87**

(86) International application number :
**PCT/US87/01200**

(87) International publication number :
**WO 88/00400 14.01.88 Gazette 88/02**

(54) **NICKEL-HYDROGEN STORAGE CELL WITH INTERNAL SHORTING UPON FAILURE.**

(30) Priority : **30.06.86 US 880451**

(43) Date of publication of application :
**22.06.88 Bulletin 88/25**

(45) Publication of the grant of the patent :
**24.06.92 Bulletin 92/26**

(84) Designated Contracting States :
**DE FR GB IT**

(56) References cited :
**US-A- 3 213 345
US-A- 3 470 025
US-A- 4 061 955
US-A- 4 420 545**

(73) Proprietor : **Hughes Aircraft Company
7200 Hughes Terrace P.O. Box 45066
Los Angeles, California 90045-0066 (US)**

(72) Inventor : **STADNICK, Steven, J.
341 Avenida Atezada
Redondo Beach, CA 90277 (US)**
Inventor : **ROGERS, Howard, H.
18361 Van Ness Avenue
Torrance, CA 90504 (US)**

(74) Representative : **Witte, Alexander, Dr.-Ing.
Witte, Weller & Gahlert Patent- und
Rechtsanwälte Augustenstrasse 7
W-7000 Stuttgart 1 (DE)**

## Description

The present invention relates to a nickel-hydrogen electrical storage cell, comprising:
- an active plate set, including a nickel positive electrode, a hydrogen negative electrode, and a separator between said positive electrode and said negative electrode;
- a pressure vessel containing said active plate set and an electrolyte, said pressure vessel having electrical feed throughs for connecting to said active plate set; and
- means contained within said pressure vessel for shorting the current path through said cell when the voltage across said cell exceeds a characteristic negative value.

A storage cell of the afore-mentioned kind has been known from Document US-A-3 213 345.

This prior art battery cell uses a semi-conductor diode each for every cell of a conventional battery. The semi-conductor diode has a biased spring contact attached thereto. Upon forced polarity reversal of anyone of the cells, the diode of the corresponding device becomes conducting and, as a result of the heating effect of the current flowing therethrough, it will be quickly heated to a temperature where the low melting point solder will be fused. This will release the biased spring contact which will permanently short-cicuit the defective cell.

Rechargeable cells or batteries are electrochemical devices for storing and retaining an electrical charge and later delivering said charge as a useful current. A familiar example of the rechargeable cell is the lead-exit cell used in automobiles. Another type of cell having a greater storage capacity for its weight is the pressurized gas-metal cell, an important type of which is the nickel-hydrogen cell used in spacecraft applications. A nickel-hydrogen cell used in a satellite is periodically charged by electrical current produced by solar panels on the spacecraft, and then later discharged to supply electrical power, when the spacecraft is in shadow or peak electrical power is demanded. A nickel-hydrogen storage cell delivers currents at about 1.3 volts, and a number of the cells are usually connected in series to produce current at the voltage required by the systems of the spacecraft.

The nickel-hydrogen cell - as, for example, described in Document US-A-4 420 545 - includes a series of active plate sets which store a charge electrochemically and later deliver that charge as a useful current, packaged within a pressure vessel that contains the electrolyte of the plate sets, the hydrogen and oxyen gases that are produced during the operation of the cell, and also the water vapor that is produced during the operation of the cell, all of which would otherwise escape and render the storage cell inoperable.

Pressurized- gas storage cells ordinarily have excellent reliability, and can operate through thousands of cycles of charging and discharging during a normal lifetime aboard a satellite or other type of spacecraft. However, such cells could possibly fail, as by a breach of the pressure vessel so that some of the contained liquids and gases escape. When this type of failure occurs, the cell fails in an open circuit state, since the only current path through the cell is through the electrolyte which is gradually lost. It will be recalled that a number of cells are usually connected in series as a battery to provide current at a desired voltage. An open circuit failure of any one of the cells therefore jeopardizes the operation of the entire battery, because there is no current path through the battery that bypasses the failed cell.

Because of the potential failure of the entire battery due to failure of a single cell, and because the battery is not accessible for repair when in space, batteries for use in space normally include failure protection circuitry that senses the failure of each individual cell and provides a current path around the cell in the event of failure. If failure occurs, the failure protection circuitry isolates the failed cell and conducts the current around the failed cell. The output voltage of the battery is diminished by the voltage of the failed cell, but it is common practice to provide a sufficient margin in the battery design that some small number of cells can fail without producing the output voltage of the battery below the spacecraft voltage requirements.

Failure protection circuitry external to the cell, but internal within the battery, typically includes a diode network or relays - as e.g. described in Document US-A-4 061 995 - to sense cell failure and reroute current around the failed cell. The weight of these electrical components and their associated wiring adds significantly to the weight of the battery, thereby reducing the usable payload of the spacecraft. Moreover, failure of component of the failure protection circuitry jeopardized the entire battery and the spacecraft.

It is therefore a major object of the present invention to provide an improved approach to negating failure of a single cell of such storage battery. The approach should operate reliably to allow continuation of the functioning of the battery, without depending upon external circuitry and without adding more weight than is saved by elimination of the failure protection circuitry. The approach should also be fully compatible with the existing elements of nickel-hydrogen cell design, since current designs are known to be generally reliable. The present invention fulfills this need, and further provides related advantages.

According to the invention, this object is achieved in that said means includes a shorting plate set in parallel with said active plate set, said shorting plate set being arranged to electrochemically react when said characteristic negative voltage value is exceeded to form an electrically conductive shorting path across said active

EP 0 271 525 B1

plate set by progressive deposition of a metallic material on said shorting plate.

In a preferred embodiment of the invention, the shorting plate set includes a shorting electrode, a dissolvable electrode, and a shorting separator between said shorting electrode and said dissolvable electrode, said dissolvable electrode being formed of a material which has a high overvoltage in combination with the material of the shortening electrode in normal cell operation wherein the maximum negative voltage of said cell is about negative 0.3 volts, and which is inert in said electrolyte, the material of said dissolvable electrode being dissolvable in said electrolyte and capable of the deposition upon the shorting electrode when a negative voltage of greater than about negative 1.5 volts is applied to said shorting place set. The pressure vessel contains the active plate set as well as the shorting plate set. Preferably, the dissolvable electrode is a silver electrode; still it may be made of materials other than silver, as long as they provide substantially the same function to the cell. Other appropriate materials include, for example, lead, copper and cadmium. The shorting electrode is preferably a nickel electrode.

In normal cell operation in the range of about positive 1.7 volts forward to about negative 0.3 volts reverse, negligible currents flow in the shorting plate set because of overvoltage present on the nickel and silver surfaces. In such normal operation, the storage cell of the present invention operates substantially identically to a conventional nickelhydrogen cell. If a failure such as a breach of the pressure vessel wall develops, a large negative voltage is impressed across the shorting plate set during discharge. If the negative voltage exceeds (that is, is more negative than) about negative 1.5 volts, the silver electrode is oxidized to silver monoxide, $Ag_2O$, which is soluble in the electrolyte. The dissolved silver oxide migrates to the shorting electrode and is reduced to silver, with the result that silver begins to deposit upon the shorting electrode. Eventually, the silver bridges completely across the space between the shorting and silver electrodes, shorting the electrodes together and then shorting the cell itself. Because the shorting plate set is in parallel with the active plate set, the cell fails by internal shorting to a short-circuited condition. Failure of the cell of the present invention therefore results in a closed or short-circuited failure, whereby electrical current is conveyed through the failed cell. The failed cell no longer produces voltage, but the total output voltage of a battery in which the failed cell is a series component is reduced only by the voltage of the failed cell. No external failure protection circuitry is required to achieve this short-circuit mode of failure.

The present invention therefore recites in a nickelhydrogen cell that fails to a short-circuited condition because of its internal design, and without the need for failure protection circuitry external to the cell. Failure of a single cell of a battery therefore does not result in failure of the battery, but simply diminishes its output voltage by that of the failed cell. The weight of the battery incorporating such cells is reduced from that of conventional batteries having failure protection circuitry, while the storage components of the cells do not change.

It will now be appreciated that, through the use of the present invention, spacecraft batteries can be protected against complete failure resulting from the open-circuit failure of a single cell, without the need for heavy failure protection circuitry. Upon failure of a single cell, the shorting plate set within the cell causes the cell to fail in a shorted state so that the battery continues to operate but at a voltage diminished only by that of the failed cell.

A cell using an additional electrode for sensing the cell condition is also described in US-A-3 470 025. According to this document, the voltage between the additional electrode and the positive electrode is sensed; a considerable increase of the voltage difference between this electrode is an indication that the cell is completely discharged, and therefore discharging is stopped.

Other features and advantages of the present invention will become apparent from the following more detailed description, taken in conjunction with the accompanying drawings, which illustrate, by way of example, the principles of the invention. In the drawings,

Figure 1 is a schematic elevational view of a flight-type nickel-hydrogen battery having several cells connected in series;

Figure 2 is a sectional elevational view of one flight-type nickel-hydrogen cell of the type illustrated in Figure 1;

Figure 3 is a detail of Figure 2, taken generally on line III-III, illustrating the configuration, arrangement, and electrical connection of the active plate sets and a preferred type of the shorting plate set;

Figure 4 is a sectional elevational view of an alternative configuration of the shorting plate set;

Figure 5 is a sectional elevational view of an other configuration of the shorting plate set; and

Figure 6 is a graph of voltage as a function of time during the operation of shorting plate set.

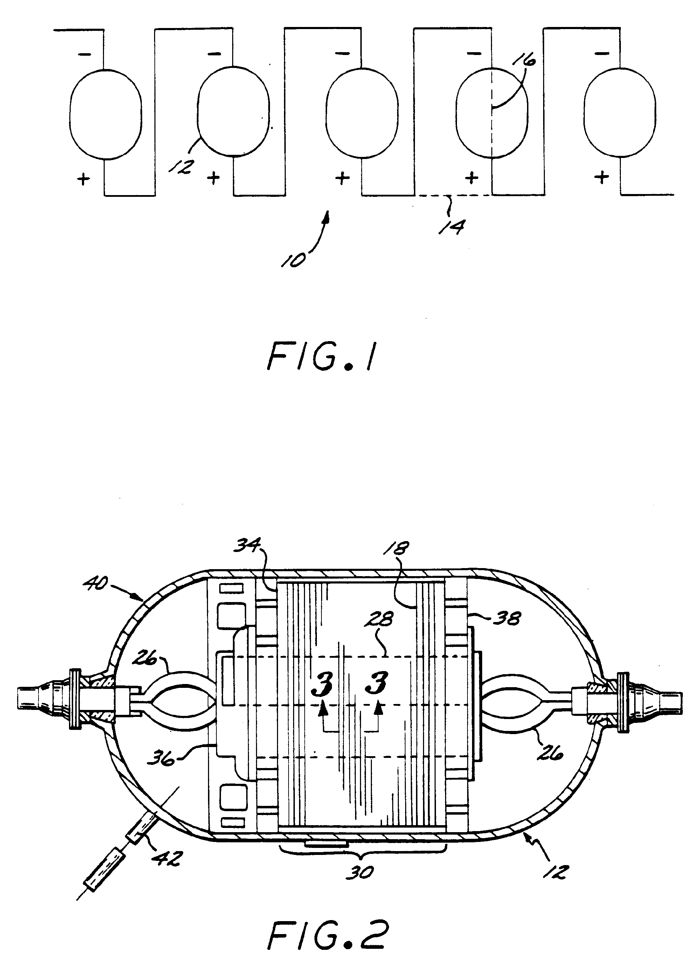

According to Figure 1, a nickel-hydrogen battery 10 stores excess energy generated by solar cells of a spacecraft, and then later delivers the stored energy to the spacecraft systems when the solar cells cannot supply the demand. The battery 10 includes a plurality of nickel-hydrogen cells 12 as the energy storage units. Each cell 12 delivers stored energy at a voltage of about 1.3 volts, which is too low to power most spacecraft systems. The cells 12 are therefore connected in a series in the manner illustrated in Figure 1 to provide a battery voltage that is the sum of the individual voltages of the cells 12. In the example of Figure 1, if each of five cells 12 has an output voltage of 1.3 volts, the five cells in series deliver current at a battery voltage of 6.5 volts. If one of the cells 12 should fail without provision for failure protection, there would be an open circuit that would prevent the battery 10 from delivering any current. Conventional external failure protection provides an external current path around a failed cell, as schematically indicated by the dashed conductor 14. The present invention provides an internal current path, schematically illustrated as the dashed conductor 16, through a failed cell, thereby permitting the battery and to continue functioning with the reduced voltage of the remaining cells, 5.2 volts in the example of Figure 1. The present approach avoids the need for the heavy failure protection circuit components required to implement the external current path 14.

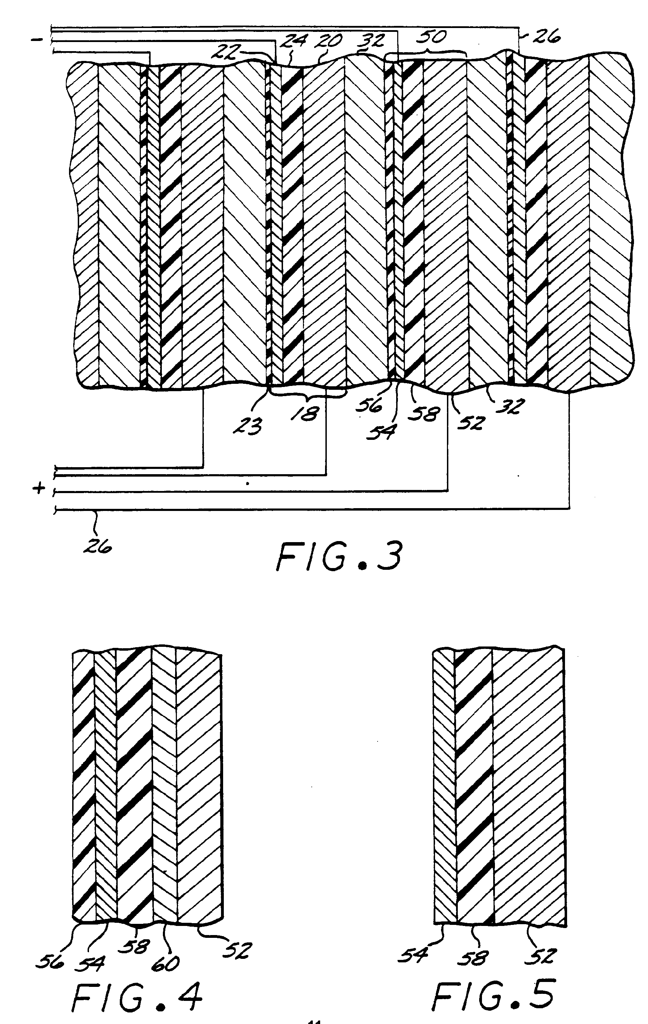

Figure 2 depicts the nickel-hydrogen cell 12 and its components. Such cell 12 includes a plurality of individual active plate sets 18 connected in parallel, illustrated in detail in Figure 3. Each active plate set 18 in turn comprises a positive electrode 20, a negative electrode 22, and an electrolyte-containing separator 24, which physically separates the electrodes 20 and 22, and also supplies the electrolyte medium through which ionic and electron transfer occur. Charging and discharging of the electrodes 20 and 22 are accomplished through two sets of electrical leads 26. All of the positive electrodes 20 are connected in parallel by one set of the leads 26, and all of the negative electrodes 22 are connected in parallel by the other set of leads 26.

Various constructions of nickel hydrogen cells and components are disclosed in the following Documents, whose disclosures are herein incorporated by reference:

US-A-4 369 212; US-A-4 283 844; US-A-4 262 061;

US-A-4 250 235; US-A-4 000 350; and US-A-3 669 744.

Preferably, the positive electrode 20 is formed by impregnating nickel hydroxide into porous sintered nickel that is supported on an etched nickel electrode substrate. The negative electrode 22 is coated on one side by a sintered mixture of platinum black and polytetrafluoroethylene and on the other side with a porous layer of polytetrafluoroethylene 23. These layers are applied to a nickel substrate in the form of etched sheet or a woven mesh, to form the negative electrode 22, termed a hydrogen electrode. Many different types of separators 24 are operable, including, for example, asbestos, nylon, and a cloth of zirconium oxide-yttrium oxide. The electrolyte, preferably an aqueous solution of potassium hydroxide, most preferably a 31% solution, is impregnated into the separator 24 and the space in and between the electrodes.

The individual active plate sets 18 are assembled onto a central core 28 to form a stacked array 30. In forming the stacked array 30, a monofilament polypropylene screen 32 is placed between each active plate set 18, so that oxygen liberated during overcharging at each positive electrode 20 can diffuse away from the electrode 20 and to the negative electrode 22 to combine with hydrogen. The stacked array 30 is placed under a longitudinal pressure of, for example, about 10 pounds per square inch ($0,7$ kg/cm$^2$), by tightening compression plates 34 against each end of the stacked array 30. The tightening of the compression plates 34 is preferably accomplished by compressing the array 30 and then tightening a nut 36 on threads on the core 28, thereby compressing a Belleville washer set 38 against the compression plate 34 to hold the stacked array 30 in place.

The stacked array 30 is sealed within a pressure vessel 40, manufactured of a material such as Inconel 718 nickel-based alloy which can withstand internal pressures in the order of one thousand pounds per square inch, absolute (psia) ($70$ kg/cm$^2$), without damage by hydrogen embrittlement or corrosion by the electrolyte. A gas fill tube 42 allows gas content and pressure within the pressure vessel 40 to be controlled. The pressure vessel 40 is typically constructed in the form of a cylindrical tube having domed ends. By way of illustration, the cell 12 having the pressure vessel 40 of external dimensions 3-1/2 inches (89 mm) diameter and 13 inches (330 mm) long can contain about 40 individual active plate sets 18, with a resulting electrical storage capacity of the cell of about 50 ampere-hours for delivery at a voltage of about 1.3 volts. The cell 12 can usually be charged and discharged through thousands of cycles without apparent damage, if the charging and discharging are accomplished properly. A number of these cells 12 can be combined in a battery, in series for higher voltages in the manner illustrated in Figure 1, or in parallel to deliver higher currents.

Charging is accomplished by impressing a voltage through the leads 26 across each active plate set 18 so that electrons flow from the electrode 22 to the electrode 20. Electrical energy is thereby stored in each active plate set 18 in the form of chemical reactants, for subsequent discharging to produce a usable current. A nickel-hydrogen cell of the type described previously may be fully charged by a solar cell array to a capacity of, for example, about 50 ampere-hours, using a current of about 5 amperes at 1.5 volts, through a charging period of about 14 hours from a discharged state. The voltage and charging time can vary widely, depending upon the power available from the solar cell array and the cycle dictated by the orbit of the spacecraft.

In accordance with the present invention, the cell 12 contains within itself means for shorting the cell when the voltage across the cell exceeds about negative 1.5 volts (that is, is more negative than negative 1.5 volts). In a preferred embodiment, this means is a shorting plate set 50 in parallel with the active plate sets 18 within the cell 12, a preferred embodiment of which is illustrated in detail in Figure 3. The shorting plate set 50 includes a shorting electrode 52, a dissolvable electrode 54, an electrode support 56 upon which the dissolvable electrode 54 is supported, and a shorting separator 58 intermediate the shorting electrode 52 and the dissolvable electrode 54. The shorting plate set 50 is connected by the leads 26 electrically in parallel with the active plate sets 18, and can be conveniently mounted on the central core 28 as an additional component of the stacked array 30, as illustrated in Figure 3. The shorting electrode 52 is connected with the positive electrodes 20, and the dissolvable electrode 45 is connected with the negative electrodes 22. The preferred materials of construction are nickel sheet for the shorting electrode 52, sintered silver sheet for the dissolvable electrode 54, nickel sheet for the electrode support 56, and modified zirconia cloth for the shorting separator 58.

In normal operation of the cell 12, negligibly small currents flow in the shorting plate set 50 due to overvoltages present on the electrodes 52 and 54. If the cell 12 fails to what would otherwise be an open circuit condition, as by a rupture of the pressure vessel so that hydrogen and/or electrolyte escape, high negative voltages greater than negative 1.5 volts are developed across the cell 12. The material of the dissolvable electrode 54 then oxidizes to a form that is soluble in the electrolyte. In the preferred case wherein the dissolvable electrode is silver sheet, the silver oxidizes to silver monoxide, which is complexed and dissolved in the potassium hydroxide electrolyte. The dissolved silver oxide plates onto the nickel electrode 52. The plated silver increases in thickness through repeated charge/discharge cycles of the cell 12, eventually becoming sufficiently thick that it builds a bridge between the electrodes 52 and 54 and thence forms an electrical current path or short between the electrodes 52 and 54. The failure of the cell that produces the high negative voltages therefore directly results in the internal shorting of the electrodes 52 and 54. The cell fails in the shorted condition rather than open circuit, so that the battery, of which the failed cell is one component, can continue operation at reduced voltage.

An alternative embodiment of the shorting plate set 50 is illustrated in Figure 4. The construction of the plate set is similar to that of the shorting plate set depicted in Figure 3, except that a nickel screen 60 is interposed between the shorting separator 58 and the shorting electrode 52. When the silver deposits onto the shorting electrode 52 and begins to form the bridge that shorts the plate set 50, enough heat is generated that the Belleville washer 38 forces the remaining portions of the dissolvable electrode 54 toward the shorting electrode 52 and into the interstices of the nickel screen 60, thereby hastening the shorting process.

Yet another embodiment of the shorting plate set 50 is illustrated in Figure 5. This configuration is similar to that of the shorting plate set illustrated in Figure 3, except that the electrode support 56 is omitted. The electrode support 56 aids in supporting the dissolvable electrode 54 and in establishing and maintaining electrical contact with it, but does not perform an otherwise indispensible function. If the dissolvable electrode 54 is sufficiently rigid and a reliable electrical contact to it can be made, the. electrode support 56 can be omitted, as in the embodiment illustrated in Figure 5. However, the added rellability of using the dissolvable electrode support 54 offsets the small amount of weight added, and it is therefore preferable to include it.

It is preferred that the shorting electrode 52 be nickel, since this material is compatible with the positive electrode 20 of the active plate sets 18. It is preferred that the dissolvable electrode 54 be silver, although other metals including lead, copper and cadmium are suitable. The oxidation potentials for these materials in 31% potassium hydroxide solution are silver, negative 0.35 volts; copper, 0.36 volts; lead, 0.58 volts; and cadmium, 0.81 volts. The material having the most negative oxidation potential, silver, is favored.

The following examples serve to illustrate aspects of the invention, but should not be taken as limiting the invention in any respect.

<u>Example 1</u>

A shorting plate set of the preferred type illustrated in Figure 3 was prepared and tested with the silver dissolvable electrode negative, corresponding to normal operation, and positive, corresponding to a failed condition. The following Table 1 summarizes the results of the tests:

## Table I

| Time Interval | Silver State | Volts | Current milliamps |
|---|---|---|---|
| Initial | − | 1.30 | 8 |
| | − | 1.91 | 19 |
| | − | 2.54 | 2250 |
| | − | 1.58 | 1 |
| Reversal | + | − 0.44 | 0 |
| | + | − 0.66 | 1 |
| | + | − 1.50 | 16 |
| | + | − 2.58 | 2781 |
| | + | − 3.03 | 10110 |

When the shorting plate set is operated in the normal range of less positive than about 1.7 volts positive and less negative than about 0.3 volts negative, substantially no current flows. When the voltage is increased above about negative 1.50 volts (that is, is more negative than about negative 1.50 volts), corresponding to a failed cell, the current becomes large, indicating dissolution of the silver electrode, and its deposition on the nickel electrode to short the cell.

Example 2

A shorting plate set of the same configuration as used for Example 1 was subjected to a continuous current of 15 A (amps), with the silver electrode positive, corresponding to a failing cell. The voltage of the cell as a function of time is reported in Table II below.

## Table II

| Elapsed Time, min. | Plate Set Voltage, volts |
|---|---|
| 0 | 3.6 |
| 0.1 | 3.1 |
| 0.6 | 2.9 |
| 0.86 | 2.7 |
| 0.88 | 2.6 |
| 0.9 | 1.1 |
| 1.8 | 0.9 |
| 3 | 0.66 |
| 12 | 0.59 |
| 26 | 0.57 |
| 67 | 0.53 |
| 123 | 0.50 |
| 189 | 0.49 |
| 251 | 0.46 |
| 397 | 0.43 |

A strip chart recorder trace of voltage showed a continuous decline with no transients, indicating the presence of the desired slow, continuous development of a short circuit through the plate set.

Example 3

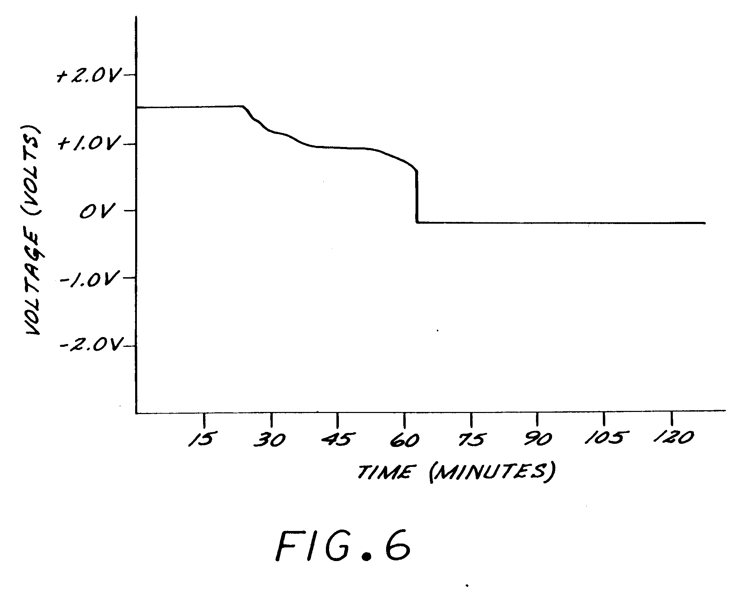

A shorting plate set of the type used in Example 1 was operated in conventional charging and discharging conditions, as indicated in Figure 6. A simulated failure was created by imposing a large negative voltage on the shorting plate set, with the silver dissolvable electrode positive. As the negative voltage increased, the shorting plate set functioned in the desired manner, shorting to a low voltage across the plate set.

As the Examples demonstrate, the shorting plate set of the present invention performs in the desired fashion, causing the cell in which it is placed to fail in the shorted, rather than open circuit, condition. No external failure protection circuit is required, thereby reducing the weight of the battery while ensuring its continued operation.

## Claims

1. A nickel-hydrogen electrical storage cell (12), comprising:
- an active plate set (18), including a nickel positive electrode (20), a hydrogen negative electrode (22), and a separator (24) between said positive electrode (20) and said negative electrode (22);
- a pressure vessel (40) containing said active plate set (18) and an electrolyte, said pressure vessel (40) having electrical feed-throughs for connecting to said active plate set (18); and
- means contained within said pressure vessel (40) for shorting the current path through said cell (12) when the voltage across said cell (12) exceeds a characteristic negative value,
characterized in that said means includes a shorting plate set (50) in parallel with said active plate set (18), said shorting plate set (50) being arranged to electrochemically react when said characteristic negative voltage value is exceeded to form an electrically conductive shorting path across said active plate set (18) by progressive deposition of a metallic material on said shorting plate set (50).

2. The storage cell of claim 1, characterized by said shorting plate set (50) including a shorting electrode (52), a dissolvable electrode (54) and a shorting separator (58) between said shorting electrode (52) and said dissolvable electrode (54), said dissolvable electrode (54) being formed of a material which has a high overvoltage in combination with the material of the shorting electrode (52) in normal cell operation wherein the maximum negative voltage of said cell (12) is about negative 0,3 volts, and which is inert in said electrolyte, the material of said dissolvable electrode (54) being dissolvable in said electrolyte and capable of deposition upon said shorting electrode (52) when a negative voltage of greater than about negative 1.5 volts is applied to said shorting plate set (50), wherein said deposition upon said shorting electrode (52), after several cell cycles, becomes sufficiently thick to build a bridge between said dissolvable electrode (54) and said shorting electrode (52).

3. The storage cell of claim 2, characterized in that said dissolvable electrode (54) is composed of a material selected from the group consisting of silver, lead, copper and cadmium.

4. The storage cell of claim 3, characterized in that said dissolvable electrode (54) is composed of silver.

5. The storage cell of any of claims 2 through 4, characterized in that said dissolvable electrode (54) is supported on an electrode support (56).

6. The storage cell of any of claims 1 through 5, characterized in that said shorting electrode (52) is composed of nickel.

7. The storage cell of any of claims 1 through 6, characterized in that said shorting plate set (50) further includes a screen (60) interposed between said shorting electrode (52) and said shorting separator (58).

8. The storage cell of claim 7, characterized in that said shorting separator (58) is formed of zirconium oxide.

9. The storage cell of any of claims 1 through 8, characterized in that the electrolyte is an aqueous solution of potassium hydroxide.

## Patentansprüche

1. Elektrische Nickel-Wasserstoff Speicherzelle (12), mit:
- einem aktiven Plattensatz (18), der eine positive Nickelelektrode (20), eine negative Wasserstoffelektrode (22) sowie ein Trennelenent (24) zwischen der positiven Elektrode (20) und der negativen Elektrode (22) umfaßt;

– einem Druckgefäß (40), der den aktiven Plattensatz (18) sowie einen Elektrolyten enthält, wobei das Druckgefäß (40) elektrische Durchführungen zum Anschließen des aktiven Plattensatzes (18) aufweist; und

– in den Druckgefäß (40) enthaltenden Mitteln zum Kurzschließen des Strompfades durch die Zelle (12), wenn die Spannung über der Zelle (12) einen charakteristischen negativen Wert annimmt, dadurch gekennzeichnet, daß die Mittel einen kurzschließenden Plattensatz (50) in Parallelschaltung zu den aktiven Plattensatz (18) umfassen, wobei der kurzschließende Plattensatz (50) so ausgestaltet ist, daß er elektrochemisch reagiert, wenn der charakteristische negative Spannungswert überschritten wird, um einen elektrisch leitenden Kurzschlußpfad über den aktiven Plattensatz (18) durch fortschreitenden Niederschlag eines metallischen Materials auf dem kurzschließenden Plattensatz (50) zu bewirken.

2. Speicherzelle nach Anspruch 1, dadurch gekennzeichnet, daß der kurzschließende Plattensatz (50) eine kurzschlißende Elektrode (52), eine lösliche Elektrode (54) sowie ein kurzschließendes Trennelenent (58) zwischen der kurzschließenden Elektrode (52) und der löslichen Elektrode (54) umfaßt, wobei die lösliche Elektrode (54) aus einen Material gebildet ist, das eine hohe Überspannung in Verbindung mit dem Material der kurzschließenden Elektrode (52) bei normaler Funktion der Zelle hat, bei der die maximale negative Spannung der Zelle (12) ungefähr minus 0,3 Volt beträgt, und die inert gegenüber den Elektrolyten ist, wobei das Material der löslichen Elektrode (54) in dem Elektrolyten löslich und in der Lage ist, auf der kurzschließenden Elektrode (52) abgeschieden zu werden, sobald eine negative Spannung von mehr als ungefähr minus 1,5 Volt an den kurzschließenden Plattensatz (50) angelegt wird, wobei die Abscheidung auf der kurzschließenden Elektrode (52), nach einigen Zell-Zyklen, hinreichend dick wird, um eine Brücke zwischen der löslichen Elektrode (54) und der kurzschließenden Elektrode (52) aufzubauen.

3. Speicherzelle nach Anspruch 2, dadurch gekennzeichnet, daß die lösliche Elektrode (54) aus einem Material besteht, das aus der Gruppe, bestehend aus Silber, Blei, Kupfer und Cadmium, ausgewählt wurde.

4. Speicherzelle nach Anspruch 3, dadurch gekennzeichnet, daß die lösliche Elektrode (54) aus Silber besteht.

5. Speicherzelle nach einen der Ansprüche 2 bis 4, dadurch gekennzeichnet, daß die lösliche Elektrode (54) auf einem Elektrodenhalter (56) gelagert ist.

6. Speicherzelle nach einen der Ansprüche 1 bis 5, dadurch gekennzeichnet, daß die kurzschließende Elektrode (52) aus Nickel besteht.

7. Speicherzelle nach einen der Ansprüche 1 bis 6, dadurch gekennzeichnet, daß der kurzschließende Plattensatz (50) ferner ein Sieb umfaßt, das zwischen der kurzschließenden Elektrode (52) und dem kurzschließenden Trennelenent (58) angeordnet ist.

8. Speicherzelle nach Anspruch 7, dadurch gekennzeichnet, daß das kurzschließende Trennelenent (58) aus Zirkonoxid besteht.

9. Speicherzelle nach einem der Ansprüche 1 bis 8, dadurch gekennzeichnet, daß der Elektrolyt eine wässrige Lösung aus Kaliumhydroxid ist.

## Revendications

1. Elément accumulateur électrique (12) à nickel-hydrogène, comportant :

– un bloc de plaque active (18), comprenant une électrode positive (20) au nickel, une électrode négative (22) à hydrogène et un séparateur (24) entre ladite électrode positive (20) et ladite électrode négative (22) ;

– une cuve (40) sous pression contenant ledit bloc de plaque active (18) et un électrolyte, ladite cuve (40) sous pression comportant des traversées électriques pour une connexion sur ledit bloc de plaque active (18) ; et

– des moyens contenus dans ladite cuve (40) sous pression pour mettre en court-circuit le trajet du courant à travers ledit élément (12) lorsque la tension à travers ledit élément (12) dépasse une valeur négative caractéristique,

caractérisé en ce que lesdits moyens comprennent un bloc de plaque (50) de mise en court-circuit en parallèle avec ledit bloc (18) de plaque active, ledit bloc (50) de plaque de mise en court-circuit étant disposé de façon à réagir électrochimiquement lorsque ladite valeur de tension négative caractéristique est dépassée pour former un trajet électriquement conducteur de mise en court-circuit à travers ledit bloc (18) de plaque active par un dépôt progressif d'une matière métallique sur ledit bloc (50) de plaque de mise en court-circuit.

2. Elément accumulateur selon la revendication 1, caractérisé en ce que ledit bloc (50) de plaque de mise en court-circuit comprend une électrode (52) de mise en court-circuit, une électrode dissoluble (54) et un séparateur (58) de mise en court-circuit entre ladite électrode (52) de mise en court-circuit et ladite électrode dissoluble (54), ladite électrode dissoluble (54) étant formée d'une matière qui possède une surtension élevée en combinaison avec la matière de l'électrode (52) de mise en court-circuit dans le fonctionnement normal de l'élément dans lequel la tension négative maximale dudit élèment (12) est d'environ 0,3 volt en valeur négative, et qui est inerte dans ledit électrolyte, la matière de ladite électrode dissoluble (54) étant dissoluble dans ledit électrolyte et capable de se déposer sur ladite électrode (52) de mise en court-circuit lorsqu'une tension négative supérieure à environ 1,5 volt en valeur négative est appliquée audit bloc (50) de plaque de mise en court- circuit, ledit dépôt sur ladite électrode (52) de mise en court-circuit, après plusieurs cycles de l'élément, devenant suffisamment épais pour former un pont entre ladite électrode dissoluble (54) et ladite électrode (52) de mise en court-circuit.

3. Elément accumulateur selon la revendication 2, caractérisé en ce que ladite électrode dissoluble (54) est composée d'une matière choisie dans le groupe constitué de l'argent, du plomb, du cuivre et du cadmium.

4. Elément accumulateur selon la revendication 3, caractérisé en ce que ladite électrode dissoluble (54) est composée d'argent.

5. Elément accumulateur selon l'une quelconque des revendications 2 à 4, caractérisé en ce que ladite électrode dissoluble (54) est supportée sur un support (56) d'électrode.

6. Elément accumulateur selon l'une quelconque des revendications 1 à 5, caractérisé en ce que ladite électrode (52) de mise en court-circuit est composée de nickel.

7. Elément accumulateur selon l'une quelconque des revendications 1 à 6, caractérisé en ce que ledit bloc (50) de plaque de mise en court-circuit comprend en outre un tamis (60) interposé entre ladite électrode (52) de mise en court-circuit et ledit séparateur (58) de mise en court-circuit.

8. Elément accumulateur selon la revendication 7, caractérisé en ce que ledit séparateur (58) de mise en court-circuit est formé d'oxyde de zirconium.

9. Elément accumulateur selon l'une quelconque des revendications 1 à 8, caractérisé en ce que l'électrolyte est une solution aqueuse d'hydroxyde de potassium.

FIG.1

FIG.2

10

FIG.3

FIG.4

FIG.5

FIG.6